(19) Europäisches Patentamt
European Patent Office
Office européen des brevets

(11) **EP 3 375 808 B1**

(12) **EUROPEAN PATENT SPECIFICATION**

(45) Date of publication and mention
of the grant of the patent:
**21.12.2022 Bulletin 2022/51**

(21) Application number: **16864314.6**

(22) Date of filing: **10.11.2016**

(51) International Patent Classification (IPC):
*C08F 283/12* (2006.01)        *C08F 290/06* (2006.01)
*C08J 3/12* (2006.01)          *C08F 2/44* (2006.01)
*G02F 1/1339* (2006.01)        *C08G 77/04* (2006.01)
*H01R 11/01* (2006.01)         *C08G 77/20* (2006.01)

(52) Cooperative Patent Classification (CPC):
(C-Sets available)
**C08F 2/44; C08F 283/124; C08F 290/068;
C08G 77/04; C08J 3/12; G02F 1/1339;
H01R 11/01;** C08G 77/20; C08G 77/80        (Cont.)

(86) International application number:
**PCT/JP2016/083386**

(87) International publication number:
**WO 2017/082353 (18.05.2017 Gazette 2017/20)**

(54) **PARTICLES, PARTICLE MATERIAL, CONNECTING MATERIAL, AND CONNECTION STRUCTURE**

TEILCHEN, TEILCHENMATERIAL, VERBINDUNGSMATERIAL UND VERBINDUNGSSTRUKTUR

PARTICULES, MATÉRIAU PARTICULAIRE, MATÉRIAU DE LIAISON ET STRUCTURE DE LIAISON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.11.2015   JP 2015221153**

(43) Date of publication of application:
**19.09.2018   Bulletin 2018/38**

(73) Proprietor: **Sekisui Chemical Co., Ltd.
Osaka-shi, Osaka 530-8565 (JP)**

(72) Inventors:
• **UEDA, Saori
Kouka-shi
Shiga 528-8585 (JP)**
• **YAMADA, Yasuyuki
Kouka-shi
Shiga 528-8585 (JP)**

(74) Representative: **Ter Meer Steinmeister & Partner
Patentanwälte mbB
Nymphenburger Straße 4
80335 München (DE)**

(56) References cited:
EP-A1- 3 428 600        WO-A1-2016/088812
WO-A1-2016/181860       JP-A- 2002 156 639
JP-A- 2003 183 409       JP-A- 2007 016 241

(52) Cooperative Patent Classification (CPC): (Cont.)

C-Sets
**C08F 283/124, C08F 212/08;**
**C08F 283/124, C08F 212/36;**
**C08F 290/068, C08F 212/08;**
**C08F 290/068, C08F 212/36**

C-Sets

**Description**

**TECHNICAL FIELD**

The present invention relates to a particle. Further, the present invention relates to a particle material containing multiple particles. Furthermore, the present invention relates to a connecting material and a connection structure, which are provided with the above particle material.

**BACKGROUND ART**

In a non-insulation type semiconductor device that is one of the power semiconductor devices used for an inverter, a member for fixing a semiconductor element is also one of the electrodes of the semiconductor device. For example, in a semiconductor device in which a power transistor is mounted on a fixing member using a Sn-Pb-based soldering material, the fixing member (base material) connecting two members to be connected serves as a collector electrode of the power transistor.

In addition, it is known that when the particle diameter of a metal particle becomes small to a size of 100 nm or less and the number of constituent atoms is reduced, the surface area ratio to the volume of the particle rapidly increases, and the melting point or the sintering temperature decreases largely as compared with that in the bulk state. A method in which by utilizing the low temperature firing function, and by using the metal particles having an average particle diameter of 100 nm or less, the surfaces of which are coated with an organic substance, as a connecting material, the connection is performed by decomposing the organic substance by heating, and by sintering the metal particles to one another is known. In this connection method, metal particles after connection change to a bulk metal, and at the same time, connection by metal bonding is obtained in the connection interface, therefore, the heat resistance, the connection reliability, and the heat dissipation become extremely high. A connection material for performing such a connection has been disclosed, for example, in the following Patent Document 1.

In Patent Document 1, a connecting material containing one or more kinds of the metal particle precursors selected from particles of a metal oxide, a metal carbonate, or a carboxylic acid metal salt, and a reducing agent that is an organic substance has been disclosed. The average particle diameter of the metal particle precursors is 1 nm or more and 50 $\mu$m or less. In the total parts by mass in the above connection material, the content of the metal particle precursors exceeds 50 parts by mass and 99 parts by mass or less.

In the following Patent Document 2, a composite material containing (a) a thermally conductive metal having a melting point, and (b) silicone particles dispersed in the thermally conductive metal has been disclosed.

In addition, in the following Patent Documents 3 to 5, silicone particles have been disclosed.

EP3428600 A which is not prior art under Art. 54(2) EPC, is directed to an adhesive for semiconductor sensor chip mounting that can reduce detection of noise and can increase heat resistance and thermal cycle resistance characteristics. JP 2007 016241 A is directed to a compound having a (meth)acryloxy group and silicon which is hydrolyzed and condensed to prepare polysiloxane particles having a (meth)acryloxy group.

JP 2002 156639 A relates to an adherent spacer for a liquid crystal display board manufactured by coating at least a part of the surface of the particle body with an adhesive layer made of a thermoplastic resin, the particle body having a hydrolysable silyl group and/or siloxane skeleton and the thermoplastic resin having oxazoline groups.

JP 2003 183409 A relates to a protruding resin-coated microparticle excellent in cell-gap precision, adhesivity to a substrate and durability to a dispersant in a wet spray method.

WO 2016/088812 A1 is directed to silicone particles having particle diameters of from 0.1 $\mu$m to 100 $\mu$m, and each silicone particle comprising a silicone particle main body and an organic polymer that covers the surface of the silicone particle main body.

WO 2016/181860 A1 relates to silicone particles having particle diameters of from 0.1 $\mu$m to 500 $\mu$m, wherein each of the silicone particles has a siloxane bond, a radically polymerizable group and a hydrophobic group with 5 or more carbon atoms.

**Related Art Document**

**Patent Document**

Patent Document 1: JP 2008-178911 A
Patent Document 2: JP 2013-243404 A
Patent Document 3: JP 2006-104456 A

Patent Document 4: JP 2013-40241 A
Patent Document 5: JP 2015-140356 A

## SUMMARY OF THE INVENTION

### PROBLEMS TO BE SOLVED BY THE INVENTION

In the connection part that connects two members to be connected, stress may be applied during connection or after connection. With this stress, cracks may occur in the members to be connected or the connection part. With the conventional connecting material, it is difficult to sufficiently suppress the occurrence of cracking in the connection part.

In particular, when two members to be connected are connected with a connection part by melting the metal atom-containing particles such as silver particles and silver oxide particles and then solidifying the molten metal atom-containing particles, the connection strength becomes increased. However, the followability to the deformation in the connection part during a stress load is low, and cracks are easy to occur in the members to be connected or the connection part. As described in Patent Document 2, even if silicone particles are used, it is difficult to suppress the occurrence of cracking during a stress load.

As described in Patent Documents 3 to 5, in some applications, silicone particles are used, but with the conventional silicone particles, it is difficult to divert the silicone particles for an application for forming a connection part that connects two members to be connected.

Further, with the conventional silicone particles, there is a problem that the moisture resistance is low.

An object of the present invention is to provide a particle and a particle material, which can suppress the occurrence of cracking during a stress load, and can further increase the moisture resistance. Further, an object of the present invention is also to provide a connecting material and a connection structure, which are provided with the above particle material.

### MEANS FOR SOLVING THE PROBLEMS

According to a broad aspect of the present invention, a particle having a 10% K value of 100 N/mm$^2$ or less, in which the particle having a 10% K value of 100 N/mm$^2$ or less contain a silicone particle body, and multiple organic resin particles deposited on a surface of the silicone particle body, are provided.

In a certain specific aspect of the particles according to the present invention, a compression recovery rate of the particle having a 10% K value of 100 N/mm$^2$ or less is 50% or less.

According to a broad aspect of the present invention, a particle material containing the multiple particles described above is provided.

According to a broad aspect of the present invention, the particle of the present invention is contained in particle material containing multiple particles, in which a part of the multiple particles in a state of not being aggregated is contained, and a part of the multiple particles in a state of being aggregated is contained, and a ratio of the average secondary particle diameter of aggregates in each of which the above particles are aggregated to the average primary particle diameter of the not-aggregated particles is 2 or less, an average 10% K value of the not-aggregated particles is 100 N/mm$^2$ or less, and each of the multiple particles contains a silicone particle body and multiple organic resin particles deposited on a surface of the silicone particle body, is provided.

In a certain specific aspect of the particle material according to the present invention, the average secondary particle diameter of the aggregates is 50 $\mu$m or less.

In a certain specific aspect of the particle material according to the present invention, a ratio of the number of the aggregates to the number of the not-aggregated particles is 1 or less.

In a certain specific aspect of the particle according to the present invention, an average compression recovery rate of the not-aggregated particles is 50% or less.

In a certain specific aspect of the particle according to the present invention, a thermal decomposition temperature of the particle material is 200°C or more.

According to a broad aspect of the present invention, a connecting material containing the above-described particle material, and a resin or metal atom-containing particles is provided.

In a certain specific aspect of the connecting material according to the present invention, the connecting material contains a resin.

In a certain specific aspect of the connecting material according to the present invention, the connecting material contains metal atom-containing particles.

In a certain specific aspect of the connecting material according to the present invention, a thermal decomposition temperature of the particle material is higher than a melting point of the metal atom-containing particles.

In a certain specific aspect of the connecting material according to the present invention, the connecting material is used for forming a connection part that connects two members to be connected, and the connecting material is used for forming the connection part by melting the metal atom-containing particles and then solidifying the molten metal atom-containing particles.

According to a broad aspect of the present invention, a connection structure in which a first member to be connected, a second member to be connected, and a connection part that connects the first member to be connected and the second member to be connected are included, and a material for the connection part is the above-described connecting material is provided.

## EFFECT OF THE INVENTION

The particle according to the present invention is a particle having a 10% K value of 100 N/mm$^2$ or less, and the particle having a 10% K value of 100 N/mm$^2$ or less contains a silicone particle body, and multiple organic resin particles deposited on a surface of the silicone particle body, therefore, the occurrence of cracking can be suppressed during a stress load, and can further increase the moisture resistance.

The particle material according to the present invention is a particle material containing multiple particles, in which a part of the multiple particles in a state of not being aggregated is contained, and a part of the multiple particles in a state of being aggregated is contained, and a ratio of the average secondary particle diameter of aggregates in each of which the particles are aggregated to the average primary particle diameter of the not-aggregated particles is 2 or less, an average 10% K value of the not-aggregated particles is 100 N/mm$^2$ or less, and each of the multiple particles contains a silicone particle body and multiple organic resin particles deposited on a surface of the silicone particle body, therefore, the occurrence of cracking can be suppressed during a stress load, and can further increase the moisture resistance.

## BRIEF DESCRIPTION OF DRAWINGS

[Fig. 1] Fig. 1 is a sectional view showing an example of a connection structure using the particle material according to the present invention.

[Fig. 2] Fig. 2 is a sectional view showing another example of a connection structure using the particle material according to the present invention.

## MODES FOR CARRYING OUT THE INVENTION

Hereinafter, the present invention will be described in detail.

(Particle material)

The particle according to the present invention is a particle having a 10% K value of 100 N/mm$^2$ or less. In the particle according to the present invention, the particle having a 10% K value of 100 N/mm$^2$ or less contains a silicone particle body, and multiple organic resin particles deposited on a surface of the silicone particle body. By blending the multiple particles, a particle material containing multiple particles can be obtained. In the present invention, the above constitution is provided, therefore, in a connection part that connects two members to be connected, the occurrence of cracking can be suppressed during a stress load, and further can increase the moisture resistance. Further, in a connection part that connects two members to be connected, the occurrence of cracking or peeling of the members to be connected during a thermal cycle can be suppressed.

From the viewpoint of further suppressing the occurrence of cracking or peeling during a thermal cycle and of further suppressing the occurrence of cracking during a stress load, it is preferred that the above particle be a particle having a 10% K value of 90 N/mm$^2$ or less. From the viewpoint of further suppressing the occurrence of cracking or peeling during a thermal cycle and of further suppressing the occurrence of cracking during a stress load, it is preferred that the above particle be a particle having a 10% K value of 1 N/mm$^2$ or more.

From the viewpoint of further suppressing the occurrence of cracking or peeling during a thermal cycle and of further suppressing the occurrence of cracking during a stress load, a compression recovery rate of the particle having a 10% K value of 100 N/mm$^2$ or less is preferably 50% or less, more preferably 30% or less, and furthermore preferably 10% or less.

From the viewpoint of further suppressing the occurrence of cracking or peeling during a thermal cycle and of further suppressing the occurrence of cracking during a stress load, it is preferred that the particle having a 10% K value of 100 N/mm$^2$ or less be a not-aggregated particle.

5

The particle material according to the present invention is a particle material containing multiple particles. The particle material according to the present invention contains a part of the multiple particles in a state of not being aggregated, and the particle material according to the present invention contains a part of the multiple particles in a state of being aggregated. The particle material according to the present invention contains primary particles and secondary particles. The primary particles are not-aggregated particles. The secondary particles are aggregates in each of which the particles are aggregated. In the aggregate, 2 or more particles are aggregated. In the aggregate, the particles may be in point contact, or may be in surface contact. In the aggregate, multiple particles may be in contact in a state that there is an interface in the contact part, or may be in contact in a state that there is no interface in the contact part. The particle material is preferably powder. In the particle material according to the present invention, a ratio of the average secondary particle diameter of the aggregates in each of which the particles are aggregated to the average primary particle diameter of the not-aggregated particles (the average secondary particle diameter / the average primary particle diameter) is 2 or less. In the particle material according to the present invention, an average 10% K value of the not-aggregated particles is 100 N/mm$^2$ or less. In the particle material according to the present invention, each of the multiple particles contains a silicone particle body, and multiple organic resin particles deposited on a surface of the silicone particle body. In the present invention, the above constitution is provided, therefore, in a connection part that connects two members to be connected, the occurrence of cracking can be suppressed during a stress load, and further can increase the moisture resistance. Further, in a connection part that connects two members to be connected, the occurrence of cracking or peeling of the members to be connected during a thermal cycle can be suppressed.

From the viewpoint of further suppressing the occurrence of cracking or peeling during a thermal cycle and of further suppressing the occurrence of cracking during a stress load, it is preferred that the above particle material contain a part of the multiple particles in a state of not being aggregated. From the viewpoint of further suppressing the occurrence of cracking or peeling during a thermal cycle and of further suppressing the occurrence of cracking during a stress load, it is preferred that the above particle material contain a part of the multiple particles in a state of being aggregated. It is preferred that the above particle material contain primary particles and secondary particles. The primary particles are not-aggregated particles. The secondary particles are aggregates in each of which the particles are aggregated. In the aggregate, 2 or more particles are aggregated. In the aggregate, the particles may be in point contact, or may be in surface contact. In the aggregate, multiple particles may be in contact in a state that there is an interface in the contact part, or may be in contact in a state that there is no interface in the contact part. The particle material is preferably powder.

From the viewpoint of further suppressing the occurrence of cracking or peeling during a thermal cycle and of further suppressing the occurrence of cracking during a stress load, an average 10% K value of the not-aggregated particles is preferably 100 N/mm$^2$ or less in the particle material.

From the viewpoint of further suppressing the occurrence of cracking or peeling during a thermal cycle and of further suppressing the occurrence of cracking during a stress load, it is preferred that a ratio of the average secondary particle diameter of the aggregates in each of which the particles are aggregated to the average primary particle diameter of the not-aggregated particles (the average secondary particle diameter/the average primary particle diameter) be 2 or less in the particle material. From the viewpoint of further suppressing the occurrence of cracking or peeling during a thermal cycle and of further suppressing the occurrence of cracking during a stress load, the ratio (the average secondary particle diameter/the average primary particle diameter) is preferably 1.7 or less, and furthermore preferably 1.5 or less.

From the viewpoint of further suppressing the occurrence of cracking or peeling during a thermal cycle and of further suppressing the occurrence of cracking during a stress load, the average secondary particle diameter of the aggregates is preferably 50 μm or less, more preferably 30 μm or less, and furthermore preferably 20 μm or less.

In the present specification, the average primary particle diameter can be determined by observing the particles with a scanning electron microscope, and by arithmetically averaging the maximum diameters of 50 particles arbitrarily selected in the observed image. In the present specification, the average secondary particle diameter is measured by using a laser diffraction particle size analyzer. As the laser diffraction particle size analyzer, "Mastersizer 2000" manufactured by Malvern Instruments Ltd. can be mentioned.

From the viewpoint of suppressing the occurrence of cracking or peeling during a thermal cycle and of suppressing the occurrence of cracking during a stress load, it is preferred that an average 10% K value of the not-aggregated particles be 100 N/mm$^2$ or less. From the viewpoint of further suppressing the occurrence of cracking or peeling during a thermal cycle and of further suppressing the occurrence of cracking during a stress load, an average 10% K value of the not-aggregated particles is more preferably 90 N/mm$^2$ or less. From the viewpoint of further suppressing the occurrence of cracking or peeling during a thermal cycle and of further suppressing the occurrence of cracking during a stress load, an average 10% K value of the not-aggregated particles is preferably 1 N/mm$^2$ or more.

The 10% K value of the particle can be measured as follows.

Using a micro compression testing machine, a particle is compressed at a smooth indenter end face of a cylinder (diameter of 50 μm, made of diamond) under the condition of loading a maximum test load of 90 mN over 30 seconds at 25°C. The load value (N) and compression displacement (mm) at this time are measured. From the obtained measurement values, the compression modulus can be determined by the following equation. As the micro compression testing machine, for example, "Fischer Scope H-100" manufactured by FISCHER INSTRUMENTS K.K. is used.

$$K \text{ value } (N/mm^2) = (3/2^{1/2}) \cdot F \cdot S^{-3/2} \cdot R^{-1/2}$$

F: Load value (N) when the particle is compressed and deformed by 10%
S: Compression displacement (mm) when the particle is compressed and deformed by 10%
R: Radius of the particle (mm)

From the viewpoint of further suppressing the occurrence of cracking or peeling during a thermal cycle and of further suppressing the occurrence of cracking during a stress load, an average compression recovery rate of the not-aggregated particles is preferably 50% or less, more preferably 30% or less, and furthermore preferably 10% or less.
The compression recovery rate of the particle can be measured as follows.
Particles are scattered on a sample table. Using a micro compression testing machine, a load (inverted load value) is applied to one scattered particle at a smooth indenter end face of a cylinder (diameter of 100 $\mu$m, made of diamond) at 25°C in a direction of the center of the particle until the particle is compressively deformed by 40%. After that, the load is removed to the initial load value (0.40 mN). The load-compression displacement during this period is measured, and the compression recovery rate can be determined from the following equation. Note that the loading rate is set to 0.33 mN/sec. As the micro compression testing machine, for example, "Fischer Scope H-100" manufactured by FISCHER INSTRUMENTS K.K. is used.

$$\text{Compression recovery rate } (\%) = [(L1 - L2)/L1] \times 100$$

L1: Compression displacement from the initial load value when applying the load to the inverted load value
L2: Unloading displacement from the inverted load value when removing the load to the initial load value

From the viewpoint of further suppressing the occurrence of cracking or peeling during a thermal cycle and of further suppressing the occurrence of cracking during a stress load, the CV value of the above particle is preferably 50% or less, and more preferably 40% or less. The lower limit of the CV value of the particle is not particularly limited. The CV value may also be 0% or more.
The coefficient of variation (CV value) is represented by the following equation.

$$CV \text{ value } (\%) = (\rho/Dn) \times 100$$

$\rho$: Standard deviation of the particle diameter of the particle
Dn: Average value of the particle diameter of the particle

From the viewpoint of further suppressing the occurrence of cracking or peeling during a thermal cycle and of further suppressing the occurrence of cracking during a stress load, the average number of the particles contained in the aggregate is preferably 10 or less. From the viewpoint of further suppressing the occurrence of cracking or peeling during a thermal cycle and of further suppressing the occurrence of cracking during a stress load, the average number of the particles contained in the aggregate is preferably 2 or more, more preferably 4 or less, and furthermore preferably 2.5 or less.
From the viewpoint of further suppressing the occurrence of cracking or peeling during a thermal cycle and of further suppressing the occurrence of cracking during a stress load, a ratio of the number of the aggregates to the number of the not-aggregated particles is preferably 1 or less, more preferably 0.1 or less, furthermore preferably 0.05 or less, and particularly preferably 0.02 or less.
In the present invention, it is preferred that the aggregates be used for forming the connection part such that one aggregate is not in contact with both of two members to be connected. It is preferred that the aggregates be used for forming the connection part such that one aggregate is not in contact with at least one of the two members to be connected.
From the viewpoint of suppressing the occurrence of cracking or peeling during a thermal cycle and of suppressing the occurrence of cracking during a stress load, each of the multiple particles is a particle containing a silicone resin (silicone particle). The material for the multiple particles contains a silicone resin. It is preferred that the aggregate be an aggregate in which silicone particles are aggregated.

From the viewpoint of suppressing the occurrence of cracking or peeling during a thermal cycle and of suppressing the occurrence of cracking during a stress load, each of the multiple particles contains a silicone particle body and multiple organic resin particles (second particles) deposited on a surface of the silicone particle body (first particle).

Note that in the present specification, a particle in which one or more organic resin particles are deposited on one silicone particle body is not included in the aggregate. The particle diameter of the particle in which one or more organic resin particles are deposited on one silicone particle body is counted in the average primary particle diameter. The particle diameter of a single organic resin particle deposited on the silicone particle body is not counted in the average primary particle diameter.

It is preferred that the silicone particle body contain 20 or more silicon atoms. The organic resin particles preferably contain no silicon atoms or contain less than 1% by weight of silicon atoms, and are preferably not silicone particles.

The material for the silicone particles is preferably a silane compound with a radical polymerizable group and a silane compound with a hydrophobic group having 5 or more carbon atoms, or a silane compound with a radical polymerizable group and with a hydrophobic group having 5 or more carbon atoms, or is preferably a silane compound with radical polymerizable groups at both terminals. When these materials are reacted, a siloxane bond is formed. In the obtained silicone particles, a radical polymerizable group and a hydrophobic group having 5 or more carbon atoms generally remain. By using such a material, silicone particles having a primary particle diameter of 0.1 $\mu$m or more and 500 $\mu$m or less can be easily obtained, and further, the chemical resistance of the silicone particle can be increased and the moisture permeability can be lowered.

In the silane compound with a radical polymerizable group, the radical polymerizable group is preferably directly bonded to the silicon atom. The silane compound with a radical polymerizable group may be used singly, or two or more kinds thereof in combination.

The silane compound with a radical polymerizable group is preferably an alkoxysilane compound. Examples of the silane compound with a radical polymerizable group include vinyltrimethoxysilane, vinyltriethoxysilane, dimethoxymethylvinylsilane, diethoxymethylvinylsilane, divinylmethoxyvinylsilane, divinylethoxyvinylsilane, divinyldimethoxysilane, divinyldiethoxysilane, and 1,3-divinyltetramethyldisiloxane.

In the silane compound with a hydrophobic group having 5 or more carbon atoms, it is preferred that the hydrophobic group having 5 or more carbon atoms be directly bonded to the silicon atom. The silane compound with a hydrophobic group having 5 or more carbon atoms may be used singly, or two or more kinds thereof in combination.

The silane compound with a hydrophobic group having 5 or more carbon atoms is preferably an alkoxysilane compound. Examples of the silane compound with a hydrophobic group having 5 or more carbon atoms include phenyltrimethoxysilane, dimethoxymethylphenylsilane, diethoxymethylphenylsilane, dimethylmethoxyphenylsilane, dimethylethoxyphenylsilane, hexaphenyldisiloxane, 1,3,3,5-tetramethyl-1,1,5,5-tetraphenyltrisiloxane, 1,1,3,5,5-pentaphenyl-1,3,5-trimethyltrisiloxane, hexaphenylcyclotrisiloxane, phenyltris(trimethylsiloxy)silane, and octaphenylcyclotetrasiloxane.

In the silane compound with a radical polymerizable group and with a hydrophobic group having 5 or more carbon atoms, the radical polymerizable group is preferably directly bonded to the silicon atom, and the hydrophobic group having 5 or more carbon atoms is preferably directly bonded to the silicon atom. The silane compound with a radical polymerizable group and with a hydrophobic group having 5 or more carbon atoms may be used singly, or two or more kinds thereof in combination.

Examples of the silane compound with a radical polymerizable group and with a hydrophobic group having 5 or more carbon atoms include phenylvinyldimethoxysilane, phenylvinyldiethoxysilane, phenylmethylvinylmethoxysilane, phenylmethylvinylethoxysilane, diphenylvinylmethoxysilane, diphenylvinylethoxysilane, phenyldivinylmethoxysilane, phenyldivinylethoxysilane, and 1,1,3,3-tetraphenyl-1,3-divinyldisiloxane.

In order to obtain silicone particles, when the silane compound with a radical polymerizable group and the silane compound with a hydrophobic group having 5 or more carbon atoms are used, the silane compound with a radical polymerizable group and the silane compound with a hydrophobic group having 5 or more carbon atoms are preferably used in a weight ratio of 1 : 1 to 1 : 20, and more preferably used in a weight ratio of 1 : 5 to 1 : 15.

In the entire silane compound for obtaining silicone particles, the number of radical polymerizable groups and the number of hydrophobic groups having 5 or more carbon atoms are preferably 1 : 0.5 to 1 : 20, and more preferably 1 : 1 to 1 : 15.

From the viewpoint of effectively increasing the chemical resistance, of effectively lowering the moisture permeability, and of controlling the average 10% K value within a preferred range, the silicone particles preferably have a dimethylsiloxane skeleton in which two methyl groups are bonded to one silicon atom, and the material for the silicone particles preferably contains a silane compound in which two methyl groups are bonded to one silicon atom.

From the viewpoint of effectively increasing the chemical resistance, of effectively lowering the moisture permeability, and of controlling the average 10% K value within a preferred range, it is preferred that in forming the silicone particles, the above-described silane compound be reacted by a radical polymerization initiator, and a siloxane bond be formed. In general, it is difficult to obtain silicone particles having an average primary particle diameter of 0.1 μm or more and 500 μm or less by using a radical polymerization initiator, and it is particularly difficult to obtain silicone particles having an average primary particle diameter of 100 μm or less. On the other hand, even when a radical polymerization initiator is used, by using a silane compound having the above constitution, silicone particles having an average primary particle diameter of 0.1 μm or more and 500 μm or less can be obtained, and silicone particles having an average primary particle diameter of 100 μm or less can also be obtained.

In order to obtain the silicone particles, it is not necessary to use a silane compound having a hydrogen atom bonded to a silicon atom. In this case, a silane compound can be polymerized using a radical polymerization initiator without using a metal catalyst. As a result, a metal catalyst can be prevented from being contained in the silicone particles, the content of the metal catalyst in the silicone particles can be reduced, further the chemical resistance is effectively increased, the moisture permeability is effectively lowered, and the average 10% K value can be controlled within a preferred range.

As a specific production method of the silicone particles, there is a method for preparing silicone particles by performing a polymerization reaction of a silane compound with a suspension polymerization method, a dispersion polymerization method, a mini-emulsion polymerization method, an emulsion polymerization method. Polymerization of a silane compound is allowed to proceed to obtain an oligomer, and then silicone particles may be prepared by performing a polymerization reaction of a silane compound that is a polymer (such as an oligomer) with a suspension polymerization method, a dispersion polymerization method, a mini-emulsion polymerization method, an emulsion polymerization method. For example, by polymerizing a silane compound with a vinyl group, a silane compound with a vinyl group bonded to a silicon atom at the terminal may be obtained. By polymerizing a silane compound with a phenyl group, a silane compound with a phenyl group bonded to a silicon atom in the side chain may be obtained as a polymer (such as an oligomer). By polymerizing a silane compound with a vinyl group and a silane compound with a phenyl group, a silane compound with a vinyl group bonded to a silicon atom at the terminal and with a phenyl group bonded to a silicon atom in the side chain may be obtained as a polymer (such as an oligomer).

By coating the silicone particle body with resin particles that are a polymer of monomers having a phenyl group, such as divinylbenzene, the moisture permeability can be more effectively reduced.

(Connecting material)

The connecting material according to the present invention is used for forming a connection part that connects two members to be connected. The connecting material according to the present invention contains the above-described particle material, and a resin or metal atom-containing particles. The connecting material according to the present invention is preferably used for forming the connection part by melting the metal atom-containing particles and then solidifying the molten metal atom-containing particles. In the resin, the particle material according to the present invention is not included. In the metal atom-containing particles, the particle material according to the present invention is not included.

The thermal decomposition temperature of the particle material is preferably higher than a melting point of the metal atom-containing particles. The thermal decomposition temperature of the particle material is preferably higher than a melting point of the metal atom-containing particles by 10°C or more, more preferably higher than the melting point by 30°C or more, and most preferably higher than the melting point by 50°C or more. From the viewpoint of suppressing the decomposition during the formation of the connecting portion, the thermal decomposition temperature of the particle material is preferably 200°C or more, more preferably 250°C or more, furthermore preferably 300°C or more, and preferably 500°C or less. In the present invention, the thermal decomposition temperature of a particle material is a temperature at which the weight reduction starts due to thermal decomposition of the sample in the air, and can be measured with a differential thermal-thermogravimetric simultaneous measurement device.

Examples of the metal atom-containing particles include metal particles, and metal compound particles. The metal compound particles contain metal atoms, and atoms other than the metal atoms. Specific examples of the metal compound particles include metal oxide particles, metal carbonate particles, metal carboxylate particles, and metal complex particles. It is preferred that the metal compound particles be metal oxide particles. For example, the metal oxide particles are sintered after being formed into metal particles by heating at the time of connection in the presence of a reducing agent. The metal oxide particles are a precursor of metal particles. As the metal carboxylate particles, metal acetate particles can be mentioned.

As the metal constituting the metal particles and the metal oxide particles, silver, copper, gold are mentioned. Silver or copper is preferred, and silver is particularly preferred. Accordingly, the metal particles are preferably silver particles or copper particles, and more preferably silver particles. The metal oxide particles are preferably silver oxide particles or copper oxide particles, and more preferably silver oxide particles. When the silver particles and silver oxide particles are used, the residue is small after connection, and the volume reduction rate is also extremely small. Examples of the silver oxide in the silver oxide particles include $Ag_2O$, and AgO.

The metal atom-containing particles are preferably sintered by heating at less than 400°C. The temperature at which the metal atom-containing particles are sintered (sintering temperature) is more preferably 350°C or less, and is preferably 300°C or more. When the temperature at which the metal atom-containing particles are sintered is equal or less than the above upper limit or less than the above upper limit, the sintering can be performed efficiently, further the energy necessary for the sintering is reduced, and the environmental load can be reduced.

When the metal atom-containing particles are metal oxide particles, it is preferred to use a reducing agent. Examples of the reducing agent include alcohols (compound with an alcoholic hydroxyl group), carboxylic acids (compound with a carboxyl group), and amines (compound with an amino group). The reducing agent may be used singly, or two or more kinds thereof in combination.

As the above alcohols, alkyl alcohol can be mentioned. Specific examples of the alcohols include, for example, ethanol, propanol, butyl alcohol, pentyl alcohol, hexyl alcohol, heptyl alcohol, octyl alcohol, nonyl alcohol, decyl alcohol, undecyl alcohol, dodecyl alcohol, tridecyl alcohol, tetradecyl alcohol, pentadecyl alcohol, hexadecyl alcohol, heptadecyl alcohol, octadecyl alcohol, nonadecyl alcohol, and icosyl alcohol. Further, as the alcohols, not only a primary alcohol-type compound, but also a secondary alcohol-type compound, a tertiary alcohol-type compound, alkanediol, or an alcohol compound having a cyclic structure can be used. Furthermore, as the alcohols, a compound having a large number of alcohol groups, such as ethylene glycol, and triethylene glycol may also be used. Moreover, as the alcohols, a compound such as citric acid, ascorbic acid, and glucose may also be used.

As the above carboxylic acids, alkylcarboxylic acid can be mentioned. Specific examples of the carboxylic acids include butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, and icosanoic acid. Further, as the carboxylic acids, not only a primary carboxylic acid-type compound, but also a secondary carboxylic acid-type compound, a tertiary carboxylic acid-type compound, dicarboxylic acid, or a carboxyl compound having a cyclic structure can be used.

As the above amines, alkyl amine can be mentioned. Specific examples of the amines include butylamine, pentylamine, hexylamine, heptylamine, octylamine, nonylamine, decylamine, undecylamine, dodecylamine, tridecylamine, tetradecylamine, pentadecylamine, hexadecylamine, heptadecylamine, octadecylamine, nonadecylamine, and icodecylamine. Further, the amines may have a branch structure. Examples of the amines having a branch structure include 2-ethylhexylamine, and 1,5-dimethylhexylamine. As the amines, not only a primary amine-type compound, but also a secondary amine-type compound, a tertiary amine-type compound, or an amine compound having a cyclic structure can be used.

The above reducing agent may also be an organic substance having an aldehyde group, an ester group, a sulfonyl group, a ketone group or may also be an organic substance such as a carboxylic acid metal salt. The carboxylic acid metal salt is used as a precursor of metal particles, and is also used as a reducing agent for metal oxide particles because of containing an organic substance.

The content of the reducing agent based on 100 parts by weight of the metal oxide particles is preferably 1 part by weight or more, and more preferably 10 parts by weight or more, and is preferably 1000 parts by weight or less, more preferably 500 parts by weight or less, furthermore preferably 100 parts by weight or less, and particularly preferably 10 parts by weight or less. When the content of the reducing agent is the above lower limit or more, the metal atom-containing particles can be sintered more densely. As a result, heat dissipation and heat resistance in a connection part can also be increased.

When a reducing agent having a melting point lower than the sintering temperature (connection temperature) of the metal atom-containing particles is used, there is a tendency that aggregation is generated at the time of connection, and voids are easily generated in the connection part. By using the carboxylic acid metal salt, the carboxylic acid metal salt is not melted by heating at the time of connection, therefore, the occurrence of voids can be suppressed. Further, in addition to the carboxylic acid metal salt, a metal compound containing an organic substance may be used as the reducing agent.

From the viewpoint of further suppressing the occurrence of cracking or peeling during a thermal cycle, it is preferred that the connecting material according to the present invention contain a resin. The resin is not particularly limited. The resin preferably contains a thermoplastic resin, or a curable resin, and more preferably contains a curable resin. Examples of the curable resin include a photocurable resin, and a thermosetting resin. The photocurable resin preferably contains a photocurable resin, and a photoinitiator. The thermosetting resin preferably contains a thermosetting resin, and a heat curing agent. Examples of the resin include, for example, a vinyl resin, a thermoplastic resin, a curable resin, a thermoplastic block copolymer, and elastomer. The resin may be used singly, or two or more kinds thereof in combination.

Examples of the vinyl resin include, for example, a vinyl acetate resin, an acrylic resin, and a styrene resin. Examples of the thermoplastic resin include, for example, a polyolefin resin, an ethylene-vinyl acetate copolymer, and a polyamide resin. Examples of the curable resin include, for example, an epoxy resin, a urethane resin, a polyimide resin, and an unsaturated polyester resin. Further, the curable resin may also be a room temperature curing-type resin, a heat curing-type resin, a photo curing-type resin, or a moisture curing-type resin. Examples of the thermoplastic block copolymer include, for example, a styrene-butadienestyrene block copolymer, a styrene-isoprene-styrene block copolymer, a hydrogenated product of a styrene-butadienestyrene block copolymer, and a hydrogenated product of a styrene-isoprene-styrene block copolymer. Examples of the elastomer include, for example, styrene-butadiene copolymer rubber, and acrylonitrile-styrene block copolymer rubber.

From the viewpoint of further suppressing the occurrence of cracking or peeling during a thermal cycle, it is preferred that the connecting material according to the present invention contain an epoxy resin.

Since the effect of the particle material of the present invention is effectively exhibited, when the connecting material contains the metal atom-containing particles, the content of the metal atom-containing particles in the connecting material is preferably larger than the content of the particle material according to the present invention, more preferably larger than the content of the particles by 10% by weight or more, and furthermore preferably larger than the content of the particles by 20% by weight or more.

In 100% by weight of the connecting material, the content of the particle material according to the present invention is preferably 0.1% by weight or more, and more preferably 1% by weight or more, and is preferably 50% by weight or less, and more preferably 30% by weight or less. When the content of the particle material is the above lower limit or more and the above upper limit or less, the occurrence of cracking or peeling during a thermal cycle can be further suppressed.

When the connecting material contains the metal atom-containing particles, in 100% by weight of the connecting material, the content of the metal atom-containing particles is preferably 0.3% by weight or more, and more preferably 3% by weight or more, and is preferably 50% by weight or less, and more preferably 40% by weight or less. When the content of the metal atom-containing particles is the above lower limit or more and the above upper limit or less, the connection resistance is further reduced.

When the connecting material contains a resin, in 100% by volume of the above connecting material, the content of the resin is preferably 5% by volume or more, and more preferably 10% by volume or more, and is preferably 40% by volume or less, and more preferably 20% by volume or less. When the content of the resin is the above lower limit or more and the above upper limit or less, the occurrence of cracking or peeling during a thermal cycle can be further suppressed.

(Connection structure)

The connection structure according to the present invention is provided with a first member to be connected, a second member to be connected, and a connection part that connects the first and second members to be connected. In the connection structure according to the present invention, the connection part is formed of the above connecting material. A material for the connection part is the above connecting material.

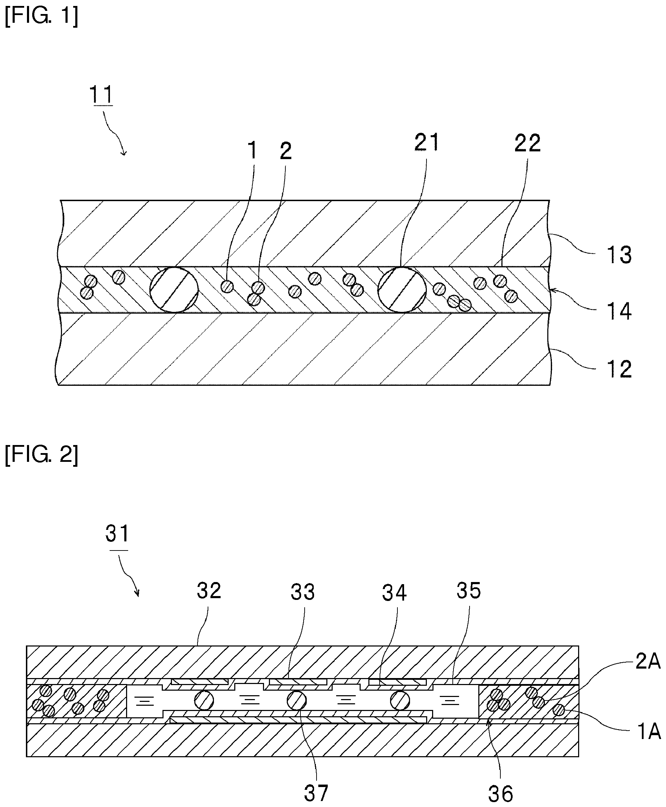

Fig. 1 is a sectional view showing an example of a connection structure using the particle material according to the present invention.

A connection structure 11 shown in Fig. 1 is provided with a first member to be connected 12, a second member to be connected 13, and a connection part 14 connecting the first and second members to be connected 12 and 13.

The connection part 14 contains the above-described particle material. The connection part 14 contains not-aggregated particles 1 and aggregates 2 in each of which particles are aggregated. One aggregate 2 is not in contact with both of the first and second members to be connected 12 and 13.

The connection part 14 contains gap control particles 21, and a metal connection part 22. In the connection part 14, one gap control particle 21 is in contact with both of the first and second members to be connected 12 and 13. The gap control particles 21 may also be conductive particles, or may also be particles not having conductivity. The metal connection part 22 is formed by melting the metal atom-containing particles and then solidifying the molten metal atom-containing particles. The metal connection part 22 is a molten solid of metal atom-containing particles.

The method for producing the connection structure is not particularly limited. As an example of the method for producing the connection structure, a method in which the connecting material is disposed between the first member to be connected and the second member to be connected to obtain a laminated body, and then the laminated body is heated and pressurized can be mentioned.

Specific examples of the member to be connected include an electronic component such as a semiconductor chip, a capacitor, and a diode, and an electronic component such as a circuit board of a printed board, a flexible printed board, a glass epoxy board, a glass board. The member to be connected is preferably an electronic component.

At least one of the first member to be connected and the second member to be connected is preferably a semiconductor wafer, or a semiconductor chip. The connection structure is preferably a semiconductor device.

The first member to be connected may have a first electrode on the surface thereof. The second member to be connected may have a second electrode on the surface thereof. As the electrode provided in the member to be connected, a metal electrode such as a gold electrode, a nickel electrode, a tin electrode, an aluminum electrode, a copper electrode, a silver electrode, a titanium electrode, a molybdenum electrode, and a tungsten electrode can be mentioned. When the member to be connected is a flexible printed board, the electrode is preferably a gold electrode, a nickel electrode, a titanium electrode, a tin electrode, or a copper electrode. When the member to be connected is a glass board, the electrode is preferably an aluminum electrode, a titanium electrode, a copper electrode, a molybdenum electrode, or a tungsten electrode. Further, when the electrode is an aluminum electrode, the electrode may be formed of only aluminum, or the electrode may be laminated with an aluminum layer on a surface of a metal oxide layer. Examples of the material for the metal oxide layer include an indium oxide doped with a trivalent metallic element, and a zinc oxide doped with a trivalent metallic element. Examples of the trivalent metallic element include Sn, Al, and Ga.

The first member to be connected may be a first member for a liquid crystal display element. The second member to be connected may be a second member for a liquid crystal display element. The connection part may also be a seal part that seals the outer peripheries of the first member for a liquid crystal display element and the second member for a liquid crystal display element in a state that the first member for a liquid crystal display element and the second member for a liquid crystal display element are opposed to each other.

The particle material can also be used for a sealing agent for a liquid crystal display element. The liquid crystal display element is provided with a first member for a liquid crystal display element, a second member for a liquid crystal display element, a seal part that seals the outer peripheries of the first member for a liquid crystal display element and the second member for a liquid crystal display element in a state that the first member for a liquid crystal display element and the second member for a liquid crystal display element are opposed to each other, and a liquid crystal disposed between the first member for a liquid crystal display element and the second member for a liquid crystal display element inside the seal part. In this liquid crystal display element, a liquid crystal dropping method is applied, and the seal part is formed by thermally curing a sealing agent for a liquid crystal dropping method.

Fig. 2 is a sectional view showing another example of a connection structure using the particle material according to the present invention.

The liquid crystal display element 31 shown in Fig. 2 has a pair of transparent glass boards 32. The transparent glass boards 32 have an insulation film (not shown) on the opposing surfaces thereof. As the material for the insulating film, for example, $SiO_2$ can be mentioned. A transparent electrode 33 is formed on the insulation film of transparent glass boards 32. As the material for the transparent electrode 33, ITO can be mentioned. The transparent electrode 33 can be formed by, for example, patterning by photolithography. An alignment film 34 is formed on the transparent electrode 33 on the surfaces of the transparent glass boards 32. As the material for the alignment film 34, polyimide is mentioned.

A liquid crystal 35 is sealed between the pair of transparent glass boards 32. Multiple spacer particles 37 are placed between the pair of transparent glass boards 32. The distance between the pair of transparent glass boards 32 is controlled by multiple spacer particles 37. A seal part 36 is placed between the outer peripheral edge parts of the pair of transparent glass boards 32. The seal part 36 prevents the liquid crystal 35 from flowing out to the outside. The seal part 36 contains not-aggregated particles 1A and aggregates 2A in each of which particles are aggregated. In the liquid crystal display element 31, a member positioned on the upper side of the liquid crystal 35 is a first member for a liquid crystal display element, and a member positioned on the lower side of the liquid crystal 35 is a second member for a liquid crystal display element.

Hereinafter, the present invention will be specifically described by way of Examples, and Comparative Examples. The present invention is not limited only to the following Examples.

(Example 1)

(1) Preparation of silicone oligomer

Into a 100-ml separable flask arranged in a warm bath, 1 part by weight of 1,3-divinyltetramethyldisiloxane, and 20 parts by weight of a 0.5% by weight p-toluenesulfonic acid aqueous solution were added. The resultant mixture was stirred at 40°C for 1 hour, and then into the stirred mixture, 0.05 part by weight of sodium hydrogen carbonate was added. After that, into the mixture, 10 parts by weight of dimethoxymethylphenylsilane, 49 parts by weight of dimethyldimethoxysilane, 0.6 part by weight of trimethylmethoxysilane, and 3.6 parts by weight of methyltrimethoxysilane were added, and the resultant mixture was stirred for 1 hour. After that, 1.9 parts by weight of a 10% by weight potassium hydroxide aqueous solution was added to the mixture, the temperature was raised to 85°C, and the reaction was performed by stirring for 10 hours while reducing the pressure with an aspirator. After completion of the reaction, the pressure was returned to normal pressure, the mixture was cooled down to 40°C, 0.2 part by weight of acetic acid was added to the cooled mixture, and the resultant mixture was left to stand in a separating funnel for 12 hours or more. The lower layer after two-layer separation was taken out, and purified by an evaporator to obtain a silicone oligomer.

(2) Preparation of silicone particle material A (including organic polymer)

A solution A in which 0.5 part by weight of tert-butyl-2-ethylperoxyhexanoate (polymerization initiator, "PERBUTYL O" manufactured by NOF CORPORATION) is dissolved in 30 parts by weight of the obtained silicone oligomer was prepared. Further, into 150 parts by weight of ion-exchange water, 0.8 parts by weight of a 40% by weight triethanolamine lauryl sulfate aqueous solution (emulsifier), and 80 parts by weight of a 5% by weight aqueous solution of polyvinyl alcohol (polymerization degree: around 2000, saponification degree: 86.5 to 89% by mole, "Gohsenol GH-20" manufactured by The Nippon Synthetic Chemical Industry Co., Ltd.) were mixed, and an aqueous solution B was prepared. Into a separable flask arranged in a warm bath, the above solution A was placed, and then the aqueous solution B was added. After that, by using a Shirasu Porous Glass (SPG) membrane (average fine pore diameter of around 10 $\mu$m), emulsification was performed. After that, the temperature was raised to 85°C, and the polymerization was performed for 9 hours. The whole amount of the particles after the polymerization was washed with water by centrifugation to obtain a silicone particle material A.

(3) Surface treatment of silicone particle material A/preparation of silicone particle material B

Into a 500-ml separable flask arranged in a warm bath, 6.5 parts by weight of the obtained silicone particle material A, 0.6 part by weight of hexadecyltrimethylammonium bromide, 240 parts by weight of distilled water, and 120 parts by weight of methanol were placed. After stirring the resultant mixture at 40°C for 1 hour, 3.0 parts by weight of divinylbenzene, and 0.5 part by weight of styrene were added into the mixture, and the resultant mixture was heated up to 75°C, and stirred for 0.5 hour. After that, 0.4 part by weight of 2,2'-azobis(isobutyric acid)dimethyl was placed in the mixture, and the resultant mixture was stirred for 8 hours and the reaction was performed. The whole amount of the particles after the polymerization was washed with water by centrifugation to obtain a silicone particle material B containing multiple particles.

(4) Preparation of connecting material

By blending and mixing 40 parts by weight of silver particles (having an average particle diameter of 15 nm), 1 part by weight of divinylbenzene resin particles (having an average particle diameter of 30 $\mu$m, and a CV value of 5%), 10 parts by weight of the silicone particle material B, and 40 parts by weight of toluene as a solvent, a connecting material was prepared.

(5) Preparation of connection structure

As the first member to be connected, a power semiconductor element was prepared. As the second member to be connected, an aluminum nitride board was prepared.
The connecting material was applied onto the second member to be connected so as to have a thickness of around 30 $\mu$m, and a connecting material layer was formed. After that, the first member to be connected is laminated on the connecting material layer, and a laminated body was obtained. By heating the obtained laminated body at 300°C for 10 minutes, the silver particles contained in the connecting material layer were sintered to prepare a connecting material.

(Example 2)

A particle material B, a connecting material, and a connection structure were obtained in the similar manner as in Example 1 except that both-terminal acrylic silicone oil ("X-22-2445" manufactured by Shin-Etsu Chemical Co., Ltd.) was used in place of a silicone oligomer.

(Example 3)

A particle material B, a connecting material, and a connection structure were obtained in the similar manner as in Example 1 except that a SPG membrane having an average fine pore diameter of around 5 $\mu$m was used.

(Example 4)

A particle material B, a connecting material, and a connection structure were obtained in the similar manner as in Example 1 except that a SPG membrane having an average fine pore diameter of around 20 $\mu$m was used.

(Example 5)

A particle material B, a connecting material, and a connection structure were obtained in the similar manner as in Example 1 except that a SPG membrane having an average fine pore diameter of around 40 $\mu$m was used, and coarse particles were removed by using a filter with a pore size of 50 $\mu$m.

(Comparative Example 1)

A particle material B, a connecting material, and a connection structure were obtained in the similar manner as in Example 1 except that the surface treatment of the particles was performed with silicone fine particles.

(Comparative Example 2)

A particle material B, a connecting material, and a connection structure were obtained in the similar manner as in Example 1 except that the surface treatment of the particles was performed with silica fine particles.

(Comparative Example 3)

The aqueous dispersion of the silicone particles obtained in Example 1 was poured into a tray, and dried at 105°C over 24 hours, the dried product was crushed in a mortar, and a particle material A, a connecting material, and a connection structure were obtained.

(Evaluation)

(1) Average primary particle diameter and average secondary particle diameter

The particle diameter of the obtained particle material B was evaluated. The average primary particle diameter was determined by observing the particles with a scanning electron microscope, and by arithmetically averaging the maximum diameters of 50 particles arbitrarily selected in the observed image. The average secondary particle diameter was measured by using a laser diffraction particle size analyzer. As the laser diffraction particle size analyzer, "Mastersizer 2000" manufactured by Malvern Instruments Ltd., was used.

(2) Average 10% K value

By using "Fischer Scope H-100" manufactured by FISCHER INSTRUMENTS K.K., an average 10% K value of the not-aggregated particles was measured. Each 10% K value of the not-aggregated particles was determined, the average value was calculated, and the average 10% K value was determined.

(3) Average compression recovery rate

By using "Fischer Scope H-100" manufactured by FISCHER INSTRUMENTS K.K., the average compression recovery rate of the not-aggregated particles was measured. Each compression recovery rate of the not-aggregated particles was determined, the average value was calculated, and the average compression recovery rate was determined.

(4) Thermal decomposition temperature

With regard to the obtained particle material, by using the following measurement device, the thermal decomposition temperature was evaluated under the following measurement conditions.

Measurement device: TD/DTA7300 (manufactured by Hitachi High-Tech Science Corporation)
Measurement conditions: A temperature range of room temperature to 600°C, a heating rate of 10°C/min, a gas of air, and a gas flow rate of 100 mL/min

(5) Thermal cycle characteristics (connection reliability)

The obtained connection structure was subjected to 1000 cycles of the thermal cycle test with setting a process of heating from -65°C to 150°C and cooling to -65°C as one cycle. The thermal cycle characteristics were determined based on the following criteria. The presence or absence of the occurrence of cracking and peeling was observed with an ultrasonic flaw detector (SAT). The occurrence of cracking or peeling was determined based on the following criteria.

[Criteria for determining thermal cycle characteristics]

○: Absence of cracking and peeling
×: Presence of cracking or peeling

(6) Cracking during stress load

A gold wire was ultrasonically connected onto a surface of the upper semiconductor chip in the obtained connection structure. Stress was applied by ultrasonic connection. It was evaluated whether or not cracking is generated in the semiconductor chip and the connection part. The cracking during a stress load was determined based on the following criteria.

[Criteria for determining cracking during stress load]

○: Absence of cracking in a semiconductor chip and a connection part
×: Presence of cracking in a semiconductor chip and a connection part

(7) Adhesive strength

In the obtained connection structure, a 5 mm × 5 mm silicon chip was mounted on a copper frame with a connecting material, and cured under the condition of 200°C for 60 minutes using an oven. After the curing, the hot die shear strength (shear strength) at 260°C was measured using a mount strength measuring device. The adhesive strength was determined based on the following criteria.

[Criteria for determining adhesive strength]

○: Shear strength of 5 MPa or more
×: Shear strength of less than 5 MPa

(8) Moisture resistance

In the obtained connection structure, the connection structure was left to stand for 168 hours under the environments of 85°C and humidity 85%, and the shear strength was measured again. The moisture resistance was determined based on the following criteria.

[Criteria for determining moisture resistance]

○: Shear strength after leaving to stand is 0.60 times or more the shear strength before leaving to stand
×: Shear strength after leaving to stand is less than 0.60 times the shear strength before leaving to stand

The results are shown in the following Table 1.

[Table 1]

| | Average primary particle diameter | Average secondary particle diameter | Average secondary particle diameter/average primary particle diameter | CV value (%) | Second particles | Average 10% K value (N/mm$^2$) | Average compression recovery rate (%) | Thermal decomposition temperature (°C) | The number of aggregates/the number of not-aggregated particles | Thermal cycle characteristics | Cracking during stress load | Adhesive strength | Moisture resistance |
|---|---|---|---|---|---|---|---|---|---|---|---|---|---|
| Example 1 | 7.3 | 8.5 | 1.2 | 35 | St-DVB | 88 | 8 | 328 | 0.005 | ○ | ○ | ○ | ○ |
| Example 2 | 6.8 | 7.3 | 1.1 | 32 | St-DVB | 50 | 8 | 330 | 0.002 | ○ | ○ | ○ | ○ |
| Example 3 | 5.2 | 8.3 | 1.6 | 38 | St-DVB | 75 | 8 | 329 | 0.013 | ○ | ○ | ○ | ○ |
| Example 4 | 22.3 | 32.8 | 1.5 | 30 | St-DVB | 50 | 7 | 335 | 0.079 | ○ | ○ | ○ | ○ |
| Example 5 | 45.8 | 49.8 | 1.1 | 26 | St-DVB | 50 | 7 | 336 | 0.002 | ○ | ○ | ○ | ○ |
| Comparative Example 1 | 6.8 | 7.3 | 1.1 | 32 | Silicone | 40 | 7 | 354 | 0.003 | ○ | ○ | ○ | × |
| Comparative Example 2 | 6.8 | 7.3 | 1.1 | 32 | Silica | 200 | 15 | 368 | 0.002 | × | × | ○ | × |
| Comparative Example 3 | 6.8 | 25.4 | 3.7 | 75 | None | 50 | 8 | 348 | 45.455 | × | × | ○ | × |

EP 3 375 808 B1

16

**EXPLANATION** OF SYMBOLS

1, 1A: Not-aggregated particles
2, 2A: Aggregates in each of which particles are aggregated
11: Connection structure
12: First member to be connected
13: Second member to be connected
14: Connection part
21: Gap control particles
22: Metal connection part
31: Liquid crystal display element
32: Transparent glass board
33: Transparent electrode
34: Alignment film
35: Liquid crystal
36: Seal part
37: Spacer particles

**Claims**

1. A particle having a 10% K value of 100 N/mm$^2$ or less,
   the particle having a 10% K value of 100 N/mm$^2$ or less comprising a silicone particle body, and multiple organic resin particles deposited on a surface of the silicone particle body.

2. The particle according to claim 1, wherein
   a compression recovery rate of the particle having a 10% K value of 100 N/mm$^2$ or less is 50% or less.

3. A particle material comprising the particle according to claim 1 or 2 in a state of multiple particles.

4. The particle according to claim 1 or 2, wherein the particle is comprised in a particle material containing multiple particles, comprising:

   a part of the multiple particles in a state of not being aggregated; and a part of the multiple particles in a state of being aggregated,
   a ratio of an average secondary particle diameter of aggregates in each of which the particles are aggregated to an average primary particle diameter of not-aggregated particles being 2 or less,
   an average 10% K value of the not-aggregated particles being 100 N/mm$^2$ or less,
   each of the multiple particles containing a silicone particle body and multiple organic resin particles deposited on a surface of the silicone particle body.

5. The particle according to claim 4, wherein
   an average secondary particle diameter of the aggregates is 50 $\mu$m or less.

6. The particle according to claim 4 or 5, wherein
   a ratio of the number of the aggregates to the number of the not-aggregated particles is 1 or less.

7. The particle according to any one of claims 4 to 6, wherein
   an average compression recovery rate of the not-aggregated particles is 50% or less.

8. The particle material according to claim 3 or the particle according to anyone of claims 4 to 7, wherein
   a thermal decomposition temperature of the particle material is 200°C or more.

9. A connecting material, comprising:

   the particle material according to claim 3 or the particle according to anyone of claims 4 to 8; and

a resin or metal atom-containing particles.

10. The connecting material according to claim 9, wherein
the connecting material contains a resin.

11. The connecting material according to claim 9 or 10, wherein
the connecting material contains metal atom-containing particles.

12. The connecting material according to claim 11, wherein
a thermal decomposition temperature of the particle material is higher than a melting point of the metal atom-containing particles.

13. The connecting material according to claim 11 or 12, wherein

the connecting material is used for forming a connection part that connects two members to be connected, and is used for forming the connection part by melting the metal atom-containing particles and then solidifying the molten metal atom-containing particles.

14. A connection structure, comprising:

a first member to be connected;
a second member to be connected; and
a connection part that connects the first member to be connected and the second member to be connected,
a material for the connection part being the connecting material according to any one of claims 9 to 13.


**Patentansprüche**

1. Teilchen mit einem 10% K-Wert von 100 N/mm$^2$ oder weniger,
wobei das Teilchen mit einem 10% K-Wert von 100 N/mm$^2$ oder weniger einen Silikonpartikelkörper und mehrere organische Harzteilchen, die auf einer Oberfläche des Silikonpartikelkörpers abgeschieden sind, umfasst.

2. Teilchen nach Anspruch 1, wobei
eine Kompressionsrückgewinnungsrate des Teilchens mit einem 10% K-Wert von 100 N/mm$^2$ oder weniger 50% oder weniger beträgt.

3. Teilchenmaterial, umfassend das Teilchen nach Anspruch 1 oder 2 in einem Zustand mit mehreren Teilchen.

4. Teilchen nach Anspruch 1 oder 2, wobei das Teilchen in einem Teilchenmaterial enthalten ist, das mehrere Teilchen enthält, umfassend:

einen Teil der multiplen Teilchen in einem Zustand, in dem sie nicht aggregiert sind; und einen Teil der multiplen Teilchen in einem Zustand, in dem sie aggregiert sind,
ein Verhältnis eines durchschnittlichen sekundären Teilchendurchmessers der Aggregate, in denen die Teilchen jeweils aggregiert sind, zu einem durchschnittlichen primären Teilchendurchmesser der nicht aggregierten Teilchen von 2 oder weniger,
ein durchschnittlicher 10% K-Wert der nicht aggregierten Teilchen 100 N/mm$^2$ oder weniger beträgt,
wobei jedes der Mehrfachteilchen einen Silikonpartikelkörper und mehrere organische Harzteilchen enthält, die auf einer Oberfläche des Silikonpartikelkörpers abgeschieden sind.

5. Teilchen nach Anspruch 4, wobei
ein durchschnittlicher Sekundärteilchendurchmesser der Aggregate 50 µm oder weniger beträgt.

6. Teilchen nach Anspruch 4 oder 5, wobei
ein Verhältnis der Anzahl der Aggregate zur Anzahl der nicht aggregierten Teilchen 1 oder weniger beträgt.

7. Teilchen nach einem der Ansprüche 4 bis 6, wobei
eine durchschnittliche Kompressionsrückgewinnungsrate der nicht aggregierten Teilchen 50 % oder weniger beträgt.

8. Teilchenmaterial nach Anspruch 3 oder Teilchen nach einem der Ansprüche 4 bis 7, wobei eine thermische Zersetzungstemperatur des Teilchenmaterials 200°C oder mehr beträgt.

9. Ein Verbindungsmaterial, umfassend:

   Teilchenmaterial nach Anspruch 3 oder Teilchen nach einem der Ansprüche 4 bis 8; und
   ein Harz oder metallatomhaltige Teilchen.

10. Verbindungsmaterial nach Anspruch 9, wobei
    das Verbindungsmaterial ein Harz enthält.

11. Verbindungsmaterial nach Anspruch 9 oder 10, wobei
    das Verbindungsmaterial metallatomhaltige Teilchen enthält.

12. Verbindungsmaterial nach Anspruch 11, wobei
    eine thermische Zersetzungstemperatur des Teilchenmaterials höher ist als ein Schmelzpunkt der metallatomhaltigen Teilchen.

13. Verbindungsmaterial nach Anspruch 11 oder 12, wobei

    das Verbindungsmaterial zur Bildung eines Verbindungsteils verwendet wird, das zwei zu verbindende Elemente verbindet, und
    das zur Bildung des Verbindungsteils durch Schmelzen der metallatomhaltigen Teilchen und anschließendem Verfestigen der geschmolzenen metallatomhaltigen Teilchen verwendet wird.

14. Verbindungsstruktur, umfassend:

    ein erstes zu verbindendes Element;
    ein zweites zu verbindendes Element; und
    ein Verbindungsteil, das das erste zu verbindende Element und das zweite zu verbindende Element miteinander verbindet,
    wobei ein Material für das Verbindungsteil das Verbindungsmaterial nach einem der Ansprüche 9 bis 13 ist.

**Revendications**

1. Particule ayant une valeur K de 10% de 100 N/mm$^2$ ou moins,
   la particule ayant une valeur K de 10% de 100 N/mm$^2$ ou moins comprenant un corps de particule de silicone, et de multiples particules de résine organique déposées sur une surface du corps de particule de silicone.

2. Particule selon la revendication 1, dans laquelle
   un taux de récupération par compression de la particule ayant une valeur K de 10% de 100 N/mm$^2$ ou moins est de 50% ou moins.

3. Matériau particulaire comprenant la particule selon la revendication 1 ou 2 dans un état de particules multiples.

4. Particule selon la revendication 1 ou 2, dans laquelle la particule est comprise dans un matériau particulaire contenant des particules multiples, comprenant :

   une partie des particules multiples dans un état de non agrégation ; et une partie des particules multiples dans un état d'agrégation,
   un rapport d'un diamètre moyen de particule secondaire des agrégats dans chacun desquels les particules sont agrégées à un diamètre moyen de particule primaire des particules non agrégées étant de 2 ou moins,
   une valeur K moyenne de 10% des particules non agrégées étant de 100 N/mm$^2$ ou moins,
   chacune des multiples particules contenant un corps de particules de silicone et de multiples particules de résine organique déposées sur une surface du corps de particules de silicone.

5. Particule selon la revendication 4, dans laquelle

un diamètre moyen de particule secondaire des agrégats est de 50 μm ou moins.

6. Particule selon la revendication 4 ou 5, dans laquelle
   le rapport entre le nombre d'agrégats et le nombre de particules non agrégées est inférieur ou égal à 1.

7. Particule selon l'une quelconque des revendications 4 à 6, dans laquelle
   un taux moyen de récupération par compression des particules non agrégées est inférieur ou égal à 50%.

8. Matériau particulaire selon la revendication 3 ou particule selon l'une quelconque des revendications 4 à 7, dans lequel
   une température de décomposition thermique du matériau particulaire est de 200°C ou plus.

9. Matériau de liaison, comprenant :

   le matériau particulaire selon la revendication 3 ou la particule selon l'une quelconque des revendications 4 à 8 ; et
   une résine ou des particules contenant des atomes métalliques.

10. Matériau de liaison selon la revendication 9, dans lequel
    le matériau de liaison contient une résine.

11. Matériau de liaison selon la revendication 9 ou 10, dans lequel
    le matériau de liaison contient des particules contenant des atomes métalliques.

12. Matériau de liaison selon la revendication 11, dans lequel
    une température de décomposition thermique du matériau particulaire est supérieure à un point de fusion des particules contenant des atomes métalliques.

13. Matériau de liaison selon la revendication 11 ou 12, dans lequel

    le matériau de liaison est utilisé pour former une partie de connexion qui connecte deux membres à connecter, et est
    utilisé pour former la partie de connexion en faisant fondre les particules contenant des atomes de métal et en solidifiant ensuite les particules fondues contenant des atomes de métal.

14. Structure de liaison, comprenant :

    un premier membre à connecter ;
    un second membre à connecter ; et
    une partie de liaison qui connecte le premier membre à connecter et le second membre à connecter,
    un matériau pour la partie de liaison étant le matériau de liaison selon l'une quelconque des revendications 9 à 13.

[FIG. 1]

[FIG. 2]

**EP 3 375 808 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3428600 A
- JP 2007016241 A
- JP 2002156639 A
- JP 2003183409 A
- WO 2016088812 A1
- WO 2016181860 A1
- JP 2008178911 A
- JP 2013243404 A
- JP 2006104456 A
- JP 2013040241 A
- JP 2015140356 A